# EUROPÄISCHE PATENTSCHRIFT

(11) **EP 3 497 059 B1**
(45) Veröffentlichungstag und Bekanntmachung des Hinweises auf die Patenterteilung: **27.05.2020**
(21) Anmeldenummer: 17757471.2
(22) Anmeldetag: 03.08.2017
(51) Int. Cl.: C01C 1/04, B01J 8/04, B01J 19/24

(54) **AMMONIAKSYNTHESEKONVERTER UND VERFAHREN ZUR HERSTELLUNG VON AMMONIAK**
AMMONIA SYNTHESIS CONVERTERAND METHOD FOR PRODUCING AMMONIA
CONVERTISSEUR DE SYNTHÈSE D'AMMONIAC ET PROCÉDÉ DE PRODUCTION D'AMMONIAC

(30) Priorität: 09.08.2016 DE 102016114711
(43) Veröffentlichungstag der Anmeldung: 19.06.2019
(73) Patentinhaber: thyssenkrupp Industrial Solutions AG, 45143 Essen (DE); thyssenkrupp AG, 45143 Essen (DE)
(72) Erfinder: GORVAL, Evgeni, 44135 Dortmund (DE); JOHANNING, Joachim, 46045 Oberhausen (DE); MICHEL, Reinhard, 44797 Bochum (DE)
(74) Vertreter: thyssenkrupp Intellectual Property GmbH
(86) Internationale Anmeldenummer: PCT/EP2017/069680
(87) Internationale Veröffentlichungsnummer: WO 2018/029083

(56) Entgegenhaltungen:
- WO-A1-01/54806
- WO-A1-2009/039947
- WO-A2-2010/103190
- US-A- 6 015 537

## Beschreibung

Die vorliegende Erfindung betrifft einen Ammoniaksynthesekonverter, wobei dieser die folgenden Komponenten umfasst: einen Druckbehälter, ein erstes Katalysatorbett, welches innerhalb des Druckbehälters angeordnet ist, ein zweites Katalysatorbett, welches innerhalb des Druckbehälters unterhalb des ersten Katalysatorbetts angeordnet ist und einen ersten Wärmetauscher, welcher derart angeordnet ist, dass ein aus dem ersten Katalysatorbett austretendes Produktfluid dem ersten Wärmetauscher zur Abgabe von Wärme zuleitbar ist und nach der Abgabe der Wärme in dem ersten Wärmetauscher dem zweiten Katalysatorbett zuleitbar ist, wobei der erste Wärmetauscher als Plattenwärmetauscher ausgebildet ist und dieser Plattenwärmetauscher oberhalb des ersten Katalysatorbetts angeordnet ist.

Gegenstand der vorliegenden Erfindung ist weiterhin ein Verfahren zur Herstellung von Ammoniak, welches in einem Ammoniaksynthesekonverter der eingangs genannten Art durchgeführt wird.

Ammoniaksynthesekonverter umfassen üblicherweise mehrere Katalysatorbetten und Wärmetauscher, welche innerhalb eines Druckbehälters angeordnet sind.

Die DE 10 2006 061 847 A1 offenbart einen Ammoniaksynthesekonverter mit mehreren Katalysatorbetten, wobei ein erstes radial durchströmtes Katalysatorbett einen Rohrbündelwärmetauscher konzentrisch umgibt. Mittels des Rohrbündelwärmetauschers wird die Reaktionswärme des aus dem ersten Katalysatorbett ausströmenden Fluids auf das Fluid übertragen, welches in das erste Katalysatorbett eingeleitet wird. Diese Art von Wärmetauscher beansprucht aufgrund der geringen Wärmestromdichte ein relativ großes Volumen pro übertragener Wärmeleistung, welches dementsprechend nicht für weiteres Katalysatormaterial zur Verfügung steht. Dies wirkt sich negativ auf den Durchsatz des Synthesekonverters aus. Für die wirtschaftliche Auslegung eines Ammoniak-Konverters ist eine optimale Nutzung des Reaktorvolumens erforderlich. Dazu gehört eine sinnvolle Volumen-Aufteilung zwischen den Katalysatorbetten, den Wärmetauschern und den Zuleitungswegen. Bedingt durch die in der Regel verhältnismäßig hohen Arbeitsdrücke der Synthesereaktoren sind Druckbehälter zudem teure Komponenten. Eine Minimierung der entsprechend teuren Druckbehältervolumina ist deshalb generell anzustreben.

In der Druckschrift WO 01/54806 A1 wird ein Reaktor beschrieben mit einer Reaktionszone mit mehreren Katalysatorbetten und Wärmetauschern vom Plattentyp, die zwischen den Katalysatorbetten angeordnet sind. Hier durchströmen die Reaktionsgase die Katalysatorbetten und die jeweils dazwischen liegenden Plattenwärmetauscher nacheinander in axialer Richtung. Die Plattenwärmetauscher befinden sich nicht außerhalb, sondern in dem von den Katalysatorbetten eingenommenen Reaktorvolumen. Ein axiales Strömungsrohr ist hier nicht vorgesehen.

Die WO 2009/039947 A1 beschreibt ein Verfahren zur Herstellung von aromatischen Aminen durch Gasphasenhydrierung von Nitroaromaten, bei dem das Reaktandengemisch in mindestens zwei voneinander getrennten Reaktionszonen unter adiabatischen Bedingungen an Katalysatorbetten reagiert und das aus einer Reaktionszone austretende Reaktandengemisch anschließend durch einen der Reaktionszone nachgeschalteten Wärmetauscher geleitet wird. Die Wärmetauscher umfassen aufeinander geschichtete und miteinander verbundene Platten mit Strömungskanälen, die in jeweils aufeinander liegenden Platten quer zueinander verlaufen. Ein Strömungsrohr für ein zweites Fluid, welches entlang einer Längsachse verlaufend angeordnet ist, ist hier nicht vorgesehen.

Vor diesem Hintergrund liegt der Erfindung die Aufgabe zugrunde, die Wirtschaftlichkeit der Synthesevorrichtung zu erhöhen.

Diese Aufgabe wird durch eine Synthesevorrichtung mit den Merkmalen des Anspruchs 1 gelöst.

Erfindungsgemäß umfasst der erste Wärmetauscher einen Plattenstapel aus Platten, welche parallel zueinander angeordnet sind, wobei zwischen den Platten in Querrichtung oder in radialer Richtung verlaufende erste Strömungskanäle für ein erstes Fluid angeordnet sind, und ein Strömungsrohr für ein zweites Fluid derart entlang der Längsachse verlaufend angeordnet ist, dass die Platten das Strömungsrohr konzentrisch umgeben.

Im Rahmen der Erfindung kann als erster Wärmetauscher beispielsweise ein im Umriss eckiger oder polygonaler Plattenwärmetauscher oder ein solcher mit einer im Wesentlichen zylindrischen Geometrie verwendet werden. Alternativ kommt auch die Verwendung einer Gruppe von ersten Wärmetauschern mit verschiedenen Umrissformen in Betracht, welche gemeinsam als Gruppe die Funktion des ersten Wärmetauschers erfüllen und wiederum diverse Umrissformen haben können. Ein solcher Plattenwärmetauscher umfasst einen Plattenstapel aus mehreren, bei zylindrischer Geometrie des Plattenwärmetauschers beispielsweise kreisringförmigen oder kreisringsegmentförmigen Platten, welche parallel zueinander um eine gemeinsame Längsachse angeordnet sind, wobei zwischen den Platten in radialer Richtung (oder bei nicht zylindrischer Geometrie in Querrichtung) verlaufende erste Strömungskanäle für ein erstes Fluid angeordnet sind, und ein Strömungsrohr für ein zweites Fluid, welches derart entlang der Längsachse verlaufend angeordnet ist, dass die Platten das Strömungsrohr konzentrisch umgeben.

Der für die erfindungsgemäße Synthesevorrichtung verwendete Plattenwärmetauscher mit in Querrichtung oder in radialer Richtung verlaufenden ersten Strömungskanälen weist im Vergleich zu Rohrbündelwärmetauschern gleicher Größe eine erhöhte Wärmestromdichte auf, so dass bei gleicher Wärmeleistung ein Wärmetauscher mit einem geringeren Volumen verwendet werden kann. Die durch den Einsatz eines Plattenwärmetauschers entstehende Volumeneinsparung kann zur Vergrößerung des Volumens des Katalysatorbetts genutzt werden, wodurch der Reaktionsdurchsatz und damit die Wirtschaftlichkeit der Synthesevorrichtung erhöht wird. Alternativ kann das Volumen des Druckbehälters, verringert werden, wodurch Fertigungs- und/oder Materialkosten gespart werden können. Zudem ist es aufgrund der kreisringförmigen Ausgestaltung der Platten möglich, das entlang der Längsachse verlaufende Rohr derart anzuordnen, dass die kreisringförmigen Platten dieses konzentrisch umgeben. Über das Strömungsrohr kann ein zweites Fluid in ein unterhalb des Plattenwärmetauschers angeordnetes Katalysatorbett geleitet werden, wodurch eine effiziente Ausnutzung des zur Verfügung stehenden Volumens innerhalb des Druckbehälters einer Synthesevorrichtung ermöglicht wird. Die Wirtschaftlichkeit der Synthesevorrichtung wird somit zusätzlich erhöht.

Der Begriff *"Fluid"* umfasst bevorzugt Gase und Flüssigkeiten.

Gemäß einer bevorzugten Ausgestaltung steht das Strömungsrohr an einer Unterseite des Plattenstapels aus dem Plattenstapel hervor, so dass das Strömungsrohr beispielsweise in einem kreiszylindrischen Innenraum eines ringförmigen Katalysatorbetts angeordnet werden kann. Über das Strömungsrohr kann bei einer derartigen Anordnung ein Fluid an einem ersten Katalysatorbett vorbei zu einem zweiten Katalysatorbett geleitet werden.

Gemäß einer vorteilhaften Ausgestaltung weist der Plattenwärmetauscher mindestens einen an der Oberseite des Plattenstapels angeordneten ersten Einlass für das erste Fluid auf, welcher derart mit mehreren, zwischen verschiedenen Platten angeordneten ersten Strömungskanälen verbunden ist, dass diese Strömungskanäle parallel von dem ersten Fluid durchströmbar sind. Der erste Einlass kann rund oder oval ausgebildet sein. Bevorzugt ist der erste Einlass kreisringsegmentförmig. Der kreisringsegmentförmige Einlass kann an das Strömungsrohr angrenzend angeordnet sein.

In diesem Zusammenhang ist es bevorzugt, wenn der erste Einlass derart angeordnet ist, dass die ersten Strömungskanäle von dem ersten Fluid radial von innen nach außen durchströmbar sind. Die bietet den Vorteil, dass die Zuführung eines Fluids über den ersten Einlass nahe der Längsachse des Plattenwärmetauschers erfolgen kann. Das Fluid kann den Plattenwärmetauscher dann im Bereich der Umfangslinie der kreisringförmigen oder kreisringsegmentförmigen Platten verlassen.

Eine vorteilhafte Ausgestaltung sieht vor, dass die ersten Strömungskanäle jeweils eine Ausströmöffnung aufweisen, durch welche das erste Fluid in einer Richtung parallel zu den Platten ausströmen kann. Somit kann das erste Fluid parallel zu den Platten aus dem Plattenstapel des Plattenwärmetauschers austreten.

Bevorzugt ist es, wenn der Plattenwärmetauscher mindestens einen an der Unterseite des Plattenstapels angeordneten ersten Auslass für das erste Fluid aufweist, welcher derart mit mehreren, zwischen verschiedenen Platten angeordneten ersten Strömungskanälen verbunden ist, dass diese Strömungskanäle parallel von dem ersten Fluid durchströmbar sind. Der Auslass kann mit den Ausströmöffnungen verbunden sein, durch welche das erste Fluid in einer Richtung parallel zu den Platten ausströmen kann. Alternativ ist es möglich, dass der Auslass mit einem senkrecht zu den Platten verlaufenden Fluidkanal verbunden ist, welcher eine oder mehrere Platten durchstößt.

Gemäß einer vorteilhaften Ausgestaltung sind zwischen den Platten in Querrichtung oder in radialer Richtung verlaufende zweite Strömungskanäle für das zweite Fluid angeordnet. Das zweite Fluid kann somit im Gleichstrom oder im Gegenstrom zu dem ersten Fluid durch den Plattenwärmetauscher geführt werden.

Vorteilhaft ist es, wenn zwischen den beispielsweise kreisringförmigen oder kreisringsegmentförmigen Platten in einer Umfangsrichtung der Platten verlaufende dritte Strömungskanäle angeordnet sind. Durch die dritten Strömungskanäle kann das zweite Fluid in einer Richtung quer zu den ersten Strömungskanälen, also quer zu dem ersten Fluid, geführt werden. Insofern kann ein Plattenwärmetauscher nach einem Querstromprinzip ermöglicht werden.

Der Plattenwärmetauscher umfasst bevorzugt mindestens drei Platten, welche jeweils so zueinander angeordnet sind, dass die Längsausdehnungen der Platten parallel zueinander ausgerichtet sind. Besonders bevorzugt sind die Platten deckungsgleich angeordnet. Bevorzugt weisen die einzelnen Platten eine Dicke im Bereich von 0,5 mm bis 4 mm auf, bevorzugter im Bereich von 0,7 mm bis 3,5 mm, im Bereich von 0,8 mm bis 3 mm, im Bereich von 0,9 mm bis 2,5 mm, im Bereich von 1,0 mm bis 2,0 mm oder im Bereich von 1,0 mm bis 1,5 mm. Der Abstand zwischen zwei benachbarten Platten liegt bevorzugt im Bereich von 5 mm bis 40 mm, bevorzugter im Bereich von 6 mm bis 35 mm, im Bereich von 7 mm bis 30 mm, im Bereich von 8 mm bis 25 mm, im Bereich von 9 mm bis 20 mm oder im Bereich von 10 mm bis 15 mm Bevorzugt werden durch den Abstand zwischen den Platten jeweils Strömungskanäle gebildet, welche jeweils ausschließlich von einem der jeweiligen Fluide durchströmt werden.

Die Platten sind gemäß einer vorteilhaften Ausgestaltung aus einem Material ausgebildet, welches Nickel aufweist, so dass die Widerstandsfähigkeit der Platten gegenüber einer Nitrierung, insbesondere bei einer Temperatur oberhalb von 400°C, erhöht wird. Bevorzugt ist der Gehalt an Nickel in dem Material der Platten größer als 30 Gew.-%, besonders bevorzugt größer als 35% Gew-%, beispielsweise größer als 40 Gew.-%.

Bevorzugt weisen die einzelnen Platten ein Muster auf, welches die Wärmeübertragungsfläche der Platten jeweils verbessert bzw. die Strömungsverteilung entlang der Platten vergleichmäßigt. Dazu können die Platten beispielsweise eine geriffelte Oberfläche aufweisen, wodurch die Oberfläche der einzelnen Platten vergrößert wird. Des Weiteren kann ein wellenförmiges Profil einer Platte als eine Stütze der benachbarten Platten dienen und dadurch die gesamte Stabilität des Wärmetauschers erhöhen.

Bevorzugt liegt der Außendurchmesser der kreisringförmigen Platten im Bereich von 50 cm bis 300 cm, bevorzugter im Bereich von 75 cm bis 250 cm oder im Bereich von 100 cm bis 200 cm.

Die für eine Ammoniak-Synthese erforderlichen Bedingungen von hohen Volumenströmen bedingen bei möglichst geringen Platzverhältnissen innerhalb eines Plattenwärmetauschers ggf. hohe Geschwindigkeiten der Fluide, was ggf. zu hohen Druckverlusten innerhalb der Zuleitungsrohre führen kann.

Bevorzugt sind die Abmessungen der Strömungskanäle derart beschaffen, dass der Druckverlust der Fluide beim Durchströmen des Plattenwärmetauschers höchstens 4 bar beträgt, bevorzugter höchstens 3 bar, 2 bar, 1 bar oder 0,5 bar.

Bevorzugt beträgt der Druckunterschied zwischen zwei Fluiden, welche durch den Plattenwärmetauscher strömen, höchstens 5 bar, bevorzugter höchstens 4 bar, 3 bar, 2 bar oder höchstens 1 bar.

Gemäß der Erfindung ist vorgesehen, dass der als Plattenwärmetauscher ausgebildete erste Wärmetauscher oberhalb des ersten Katalysatorbetts angeordnet ist. Durch eine Anordnung des Wärmetauschers oberhalb des ersten, insbesondere obersten, Katalysatorbetts kann die Zugänglichkeit zu dem Wärmetauscher nach dem Einbau in den Druckbehälter verbessert werden. Zudem kann in dem Fall, dass das Fluid von oben in den Druckbehälter eingeleitet wird, auf zusätzliche Vorrichtungen zu Führung des Fluid in Richtung des Wärmetauschers verzichtet werden.

Bevorzugt ist es, wenn ein Strömungsrohr des Wärmetauschers an einer Unterseite des Plattenstapels aus dem Plattenstapel hervorsteht, wobei das erste Katalysatorbett ringförmig ausgebildet ist und das Strömungsrohr konzentrisch umgibt. Über das Strömungsrohr kann aus dem Plattenwärmetauscher austretendes Fluid an dem ersten Katalysatorbett vorbei zu dem zweiten Katalysatorbett geleitet werden, welches unterhalb des ersten Katalysatorbetts angeordnet ist. In diesem Zusammenhang ist bevorzugt der Plattenstapel des Plattenwärmetauschers oberhalb des ersten Katalysatorbetts angeordnet.

Vorteilhaft ist eine Ausgestaltung, mit einem dritten Katalysatorbett und einem zweiten Wärmetauscher, welcher derart angeordnet ist, dass ein aus dem zweiten Katalysatorbett austretendes Produktfluid dem zweiten Wärmetauscher zur Abgabe von Wärme zuleitbar ist, und das Produktfluid nach der Abgabe der Wärme dem dritten Katalysatorbett zuleitbar ist. Über den zweiten Wärmetauscher kann das dem dritten Katalysatorbett zugeführte Fluid vorgewärmt werden. Der zweite Wärmetauscher ist bevorzugt als Plattenwärmetauscher ausgebildet.

In diesem Zusammenhang ist es vorteilhaft, wenn der zweite Wärmetauscher oberhalb des ersten Wärmetauschers angeordnet ist, so dass eine besonders vorteilhafte Strömungsführung mit einem kompakten Aufbau ermöglicht wird.

Gemäß einer bevorzugten Ausgestaltung ist vorgesehen, dass der erste Wärmetauscher und der zweite Wärmetauscher derart angeordnet sind, dass ein in den Druckbehälter eintretendes Eduktfluid zunächst durch den zweiten Wärmetauscher, dann durch den ersten Wärmetauscher und dann in das erste Katalysatorbett leitbar ist. Somit kann das in den Druckbehälter eintretende Eduktfluid vorteilhaft vorgewärmt werden.

Der Druckbehälter der Synthesevorrichtung weist bevorzugt eine zylindrische Form mit einer vertikal ausgerichteten Längsachse auf. Der Einlass des Druckbehälters ist bevorzugt am oberen Ende des Druckbehälters und der Auslass am unteren Ende des Druckbehälters angeordnet. Der Druckbehälter wird bevorzugt bei einem Druck im Bereich von 90 bis 400 bar betrieben.

Bevorzugt basiert die Synthesevorrichtung auf einer Querdurchströmung oder einer radialen Durchströmung der Katalysatorbetten, wobei die Katalysatorbetten bevorzugt die Form von Hohlzylindern aufweisen. Bevorzugt erfolgt die Zuführung der Fluide über zylindrische Mantelflächen der Katalysatorbetten. Die Fluide können die Katalysatorbetten sowohl radial von außen nach innen als auch radial von innen nach außen durchströmen. Innerhalb der Synthesevorrichtung können alle Katalysatorbetten radial von außen nach innen oder alle Katalysatorbetten radial von innen nach außen durchströmt werden. Ebenso kann innerhalb der Synthesevorrichtung mindestens ein Katalysatorbett radial von innen nach außen und mindestens ein anderes Katalysatorbett radial von außen nach innen durchströmt werden.

Bevorzugt ist der als Plattenwärmetauscher ausgebildete Wärmetauscher nicht innerhalb eines Katalysatorbetts angeordnet, so dass eine Beeinträchtigung des Wärmetauschers durch die Katalysatorschüttung nicht zu befürchten ist.

Ein weiterer Aspekt der Erfindung betrifft ein Verfahren zur Herstellung von Ammoniak aus den Edukten Wasserstoff und Stickstoff, wobei das Verfahren die folgenden Schritte umfasst:
a) Bereitstellen eines Eduktstroms umfassend Reaktanden und ggf. inerte Komponenten;
b) Einleiten des Eduktstroms in einen Druckbehälter;
c) Weiterleiten des Eduktstroms auf ein erstes Katalysatorbett;
d) Umsetzen zumindest eines Teils der Reaktanden des Eduktstroms auf dem ersten Katalysatorbett unter Bildung eines ersten Produktstroms, umfassend Reaktanden, Produkt und ggf. Inerte; und
e) Einleiten des ersten Produktstroms in einen ersten Wärmetauscher, wobei der erste Produktstrom abgekühlt wird;
f) Weiterleiten des abgekühlten, ersten Produktstroms auf ein zweites Katalysatorbett;
g) Umsetzen zumindest eines Teils der Reaktanden des abgekühlten, ersten Produktstroms auf dem zweiten Katalysatorbett unter Bildung eines zweiten Produktstroms, umfassend Reaktanden, Produkt und ggf. Inerte;
wobei das Verfahren in einer Synthesevorrichtung der zuvor beschriebenen Art durchgeführt wird, bei der der erste Wärmetauscher als vorstehend beschriebener Plattenwärmetauscher ausgebildet ist.

Vorzugsweise handelt es sich bei dem erfindungsgemäßen Verfahren um eine exotherme Reaktion mit heterogener Katalyse.

Bei dem erfindungsgemäßen Verfahren können dieselben Vorteile erreicht werden, wie sie bereits im Zusammenhang mit der erfindungsgemäßen Synthesevorrichtung und dem Plattenwärmetauscher beschrieben worden sind.

Alle bevorzugten Ausführungsformen, welche vorstehend im Zusammenhang mit der erfindungsgemäßen Synthesevorrichtung beschrieben worden sind, gelten analog auch für das erfindungsgemäße Verfahren zur Herstellung eines Produkts und werden daher nicht wiederholt.

In Schritt a) des erfindungsgemäßen Verfahrens wird ein Eduktstrom bevorzugt kontinuierlich bereitgestellt. Bevorzugt umfasst der Eduktstrom flüssige und/oder gasförmige Komponenten. Inerte Komponenten umfassen dabei solche Komponenten, welche in dem jeweiligen Verfahren inert sind. Bevorzugt umfasst der Eduktstrom Wasserstoff und Stickstoff. Zusätzlich kann der Eduktstrom als inerte Komponenten beispielsweise Methan sowie ggf. Argon, und/oder ggf. Helium umfassen. Bevorzugt umfasst der Eduktstrom Wasserstoff und Stickstoff im molaren Verhältnis von 3:1.

In Schritt b) des erfindungsgemäßen Verfahrens wird der Eduktstrom in einen Druckbehälter eingeleitet. Dazu wird der Eduktstrom bevorzugt zunächst komprimiert, bevorzugt auf einen Druck im Bereich von 90 bis 400 bar. Bevorzugt wird der Edukstrom über einen Einlass in den Druckbehälter eingeleitet, welcher bevorzugt am oberen Ende des Druckbehälters angeordnet ist.

In Schritt c) wird der Eduktstrom auf das erste Katalysatorbett weitergeleitet.

In Schritt d) wird zumindest ein Teil der Reaktanden unter Bildung eines Produktstroms umfassend Reaktanden, Produkt und ggf. inerte Komponenten umgesetzt. Bevorzugt ist der Produktstrom unmittelbar nach der Umsetzung wärmer als der Eduktstrom unmittelbar vor der Umsetzung. Dies kann beispielsweise dadurch bedingt sein, dass die zugrunde liegende Umsetzung exotherm verläuft. Bevorzugt liegt die Temperatur des Produktstroms unmittelbar nach der Umsetzung im Bereich von 450°C bis 550°C. Bevorzugt liegt die Temperaturdifferenz zwischen Eduktstrom und Produktstrom unmittelbar nach der Umsetzung im Bereich von 50°C bis 200°C. Der Produktstrom umfasst bevorzugt Ammoniak sowie Reaktanden. In einer bevorzugten Ausführungsform umfasst der Eduktstrom Wasserstoff und Stickstoff sowie ggf. inerte Komponenten und der Produktstrom Ammoniak, Wasserstoff und Stickstoff sowie ggf. inerte Komponenten.

In Schritt e) des erfindungsgemäßen Verfahrens wird der Produktstrom in dem erstem Wärmetauscher abgekühlt. Bevorzugt wird der Produktstrom derart abgekühlt, dass die Temperatur des Produktstroms nach dem Abkühlen höchstens 450°C beträgt, bevorzugter höchstens 400°C, höchstens 350°C, oder höchstens 300°C.

In Schritt f) wird der Produktstrom nach dem Durchströmen des ersten Wärmetauschers in ein zweites Katalysatorbett eingeleitet.

In Schritt g) wird zumindest ein Teil der Reaktanden des Produktstroms unter Bildung eines zweiten Produktstroms umfassend Reaktanden, Produkt und ggf. inerte Komponenten umgesetzt. Bevorzugt ist der weitere Produktstrom unmittelbar nach der Umsetzung wärmer als der Produktstrom unmittelbar vor der Umsetzung. Dies kann beispielsweise dadurch bedingt sein, dass die zugrunde liegende Umsetzung exotherm verläuft. Bevorzugt liegt die Temperatur des weiteren Produktstroms unmittelbar nach der Umsetzung im Bereich von 420°C bis 550°C. Bevorzugt liegt die Temperaturdifferenz zwischen dem Produktstrom unmittelbar vor der Umsetzung und dem weiteren Produktstrom unmittelbar nach der Umsetzung im Bereich von 50°C bis 200°C. Der weitere Produktstrom umfasst bevorzugt Ammoniak sowie Wasserstoff, Stickstoff und ggf. inerte Komponenten wie beispielsweise Argon, Methan und ggf. Helium.

Bevorzugt wird in einem dem Schritt d) vorausgehenden, zusätzlichen Schritt des erfindungsgemäßen Verfahrens der Eduktstrom in einem Wärmetauscher vorgewärmt. Bevorzugt wird der Eduktstrom auf eine Temperatur von mindestens 275°C vorgewärmt, bevorzugter auf eine Temperatur von mindestens 320°C, mindestens 340°C, mindestens 360°C, mindestens 380°C oder mindestens 400°C. Der Wärmetauscher ist bevorzugt im Strömungsweg des Eduktstroms zwischen dem Einlass des Druckbehälters und einem Katalysatorbett angeordnet und befindet sich insbesondere nicht innerhalb des Katalysatorbettes. Bevorzugt wird der Eduktstrom in demselben Wärmetauscher vorgewärmt, in welchem der Produktstrom in Schritt e) abgekühlt wird. Insofern kann die Reaktionswärme des aus dem ersten Katalysatorbett ausströmenden Produktstroms auf den Eduktstrom übertragen werden.

Bevorzugt wird der Plattenwärmetauscher im Gleichstrom durchströmt. In einer anderen Ausführungsform ist der Wärmetauscher ebenfalls als Plattenwärmetauscher ausgebildet und wird im Gegenstrom durchströmt.

Bedingt durch die spezifischen Gegebenheiten bei einer Ammoniak-Synthese ist eine Begrenzung der Plattentemperaturen auf einen Bereich deutlich unterhalb der Gasaustrittstemperaturen aus den Katalysatorbetten wünschenswert. Dabei liegen die Gasaustrittstemperaturen aus den Katalysatorbetten bei einer Ammoniak-Synthese typischerweise im Bereich von 450°C bis 550°C. Bevorzugt wird daher der erfindungsgemäße Plattenwärmetauscher bei einer Ammoniak-Synthese im Gleichstrom durchströmt, um die Plattentemperatur gering zu halten.

Gemäß einer bevorzugten Ausgestaltung weist das Verfahren zusätzlich folgende Schritte auf:
h) Einleiten des zweiten Produktstroms in einen zweiten Wärmetauscher, wobei der zweite Produktstrom abgekühlt wird;
g) Weiterleiten des abgekühlten, zweiten Produktstroms auf ein drittes Katalysatorbett.

Bevorzugt ist der zweite Wärmetauscher ebenfalls als ein oben beschriebener Plattenwärmetauscher ausgebildet.

Die erfindungsgemäße Synthesevorrichtung ist besonders geeignet zur Durchführung des erfindungsgemäßen Verfahrens. Ein weiterer Aspekt der Erfindung betrifft daher die Verwendung der erfindungsgemäßen Vorrichtung in dem erfindungsgemäßen Verfahren.

Weitere Vorteile, Merkmale und Einzelheiten der Erfindung sollen nachfolgend anhand der in den Zeichnungen dargestellten Ausführungsbeispiele erläutert werden.
Fig. 1 zeigt eine Synthesevorrichtung mit einem Plattenwärmetauscher gemäß einem ersten Ausführungsbeispiel der Erfindung in einer Schnittdarstellung.
Fig. 2 zeigt den Plattenwärmetauscher gemäß Fig. 1 in einer schematischen, Schnittdarstellung entlang der in Fig. 1 gekennzeichneten Schnittebene II-II'.
Fig. 3 zeigt eine Synthesevorrichtung mit einem Plattenwärmetauscher gemäß einem zweiten Ausführungsbeispiel der Erfindung in einer Schnittdarstellung.
Fig. 4 zeigt den Plattenwärmetauscher gemäß Fig. 3 in einer schematischen, Schnittdarstellung entlang der in Fig. 3 gekennzeichneten Schnittebene IV-IV'.
Fig. 5 zeigt eine Synthesevorrichtung mit einem Plattenwärmetauscher gemäß einem dritten Ausführungsbeispiel der Erfindung in einer Schnittdarstellung.

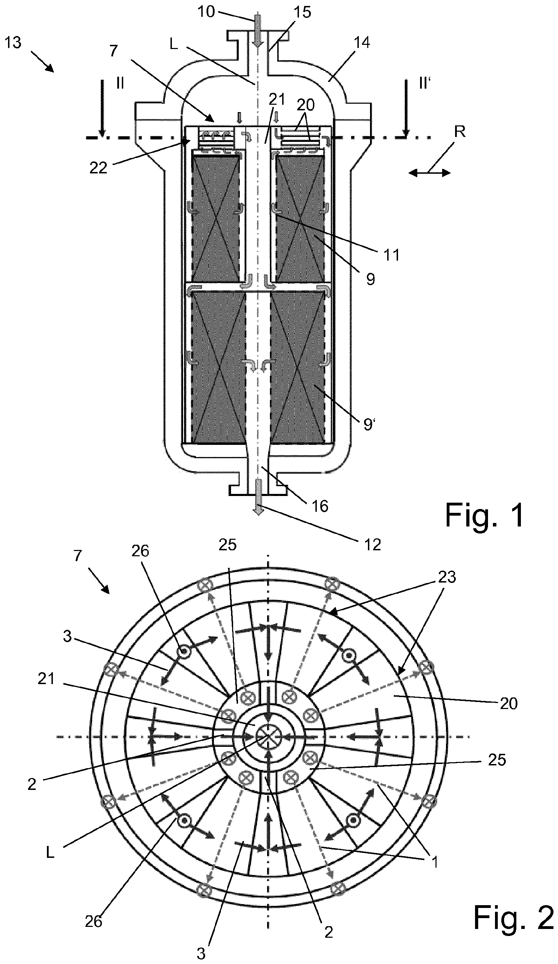

In Fig. 1 ist eine als Ammoniakkonverter ausgebildete Synthesevorrichtung 13 gemäß einem ersten Ausführungsbeispiel dargestellt. Die Synthesevorrichtung 13 weist einen Druckbehälter 14 auf, innerhalb dessen ein erstes Katalysatorbett 9 und ein zweites Katalysatorbett 9' angeordnet sind. Die Katalysatorbetten 9, 9' sind zylinderringförmig, d.h. hohlzylindrisch, ausgebildet. Das zweite Katalysatorbett 9' ist unterhalb des ersten Katalysatorbetts 9 angeordnet. Beide Katalysatorbetten 9, 9' sind konzentrisch zu einer Längssachse L des Druckbehälters 14. Über einen an der Oberseite des Druckbehälters 14 angeordneten Einlass 15 kann ein Eduktstrom 10, umfassend Reaktanden und ggf. inerte Komponenten, in den Druckbehälter 14 eingeleitet werden. An der Unterseite des Druckbehälters 14 ist ein Auslass 16 zum Abziehen eines Produktstroms vorgesehen. Innerhalb des Druckbehälters 14 ist ein als Plattenwärmetauscher ausgebildeter erster Wärmetauscher 7 derart angeordnet, dass ein aus dem ersten Katalysatorbett 9 austretendes Produktfluid 11 dem ersten Wärmetauscher 7 zur Abgabe von Wärme zuleitbar ist, und nach der Abgabe der Wärme in dem Wärmetauscher 7 dem zweiten Katalysatorbett 9' zuleitbar ist.

Der erste Plattenwärmetauscher 7 ist oberhalb des ersten Katalysatorbetts 9 angeordnet. Er weist einen Plattenstapel 22 aus mehreren, beispielsweise kreisringsegmentförmigen Platten 20 auf, welche parallel zueinander um die Längsachse L angeordnet sind. Ferner umfasst der Plattenwärmetauscher 7 ein Strömungsrohr 21 für ein zweites Fluid, welches derart entlang der Längsachse L verlaufend angeordnet ist, dass die kreisringsegmentförmigen Platten 20 das Strömungsrohr 21 konzentrisch umgeben. Das Strömungsrohr 21 steht an der Unterseite des Plattenstapels 22 aus dem Plattenstapel 22 hervor.

Wie Fig. 2 zeigt, sind zwischen den Platten 20 in radialer Richtung R verlaufende erste Strömungskanäle 1 für ein erstes Fluid angeordnet. Das Eduktfluid 10 tritt in die ersten Strömungskanäle 1 über erste Einlässe 25 ein, welche zum Beispiel kreissegmentförmig ausgebildet sind. Die ersten Einlässe 25 sind nahe dem Strömungsrohr 21, also im Bereich nahe der Längsachse L, angeordnet. Ausgehend von einem mit den kreissegmentförmigen Einlässen 25 fluidverbundenen, inneren Ringraum strömt das Eduktfluid 10 von innen nach außen radial durch die ersten Strömungskanäle 1. Hierbei teilt sich der Eduktstrom 10 auf mehrere Teilströme auf, welche jeweils einen ersten Strömungskanal durchströmen. Die ersten Strömungskanäle 1 weisen jeweils eine Ausströmöffnung 23 auf, durch welche das nun vorgewärmte Eduktfluid 10 in einer Richtung R parallel zu den Platten 20 in einen äußeren Ringraum ausströmt. Über diesen Ringraum wird das vorgewärmte Eduktfluid nach unten aus dem Plattenwärmetauscher 7 abgegeben. Es strömt über einen Spaltraum zwischen dem ersten Katalysatorbett 9 und der Innenwandung des Druckbehälters 14 bzw. einer zusätzlichen, konzentrisch zur Innenwand 14 des Druckbehälters angeordneten äußeren Begrenzungswand eines Konvertereinsatzes in das erste Katalysatorbett 9.

Der vorgewärmte Eduktstrom durchströmt das erste Katalysatorbett 9 radial von außen nach innen. Dabei findet bevorzugt eine exotherme Reaktion unter Bildung eines Produktstroms 11 statt. Bevorzugt verlässt der Produktstrom 11 das Katalysatorbett 9 mit einer Temperatur von höchstens 525°C. Der Produktstrom 11 wird über einen konzentrisch zu dem Strömungsrohr 21 angeordneten Ringraum in Richtung der Unterseite des Plattenwärmetauschers 7 geleitet und tritt von unten in zweite Einlässe 26 des Wärmetauschers 7 ein. Die zweiten Einlässe sind kreisringsegmentförmig ausgestaltet. Über die zweiten Einlässe 26 gelangt das Produktfluid 11 in weitere Zwischenräume 2, 3 zwischen den Platten 20. Zunächst durchströmt das Produktfluid 11 Strömungskanäle 3, welche in einer Umfangsrichtung zwischen den kreisringsegmentförmigen Platten 20 verlaufen. Das Produktfluid 11 wird nach Art einer Querstromführung relativ zu dem Eduktfluid 10 durch den Plattenwärmetauscher 7 geleitet. Ausgehend von diesen in Umfangsrichtung verlaufenden Strömungskanälen 3 strömt das Produktfluid 11 durch in radialer Richtung R verlaufende Strömungskanäle 2 in das Strömungsrohr 21. Über das Strömungsrohr 21 wird das nunmehr abgekühlte Produktfluid 11 an dem ersten Katalysatorbett 9 vorbei zu dem zweiten Katalysatorbett 9' geführt.

Das zweite Katalysatorbett 9' wird bevorzugt radial von außen nach innen durchströmt, wobei ein weiterer Teil der im Produktstrom enthaltenden Edukte zu Produkt umgesetzt werden. Bevorzugt verlässt der so gebildete zweite Produktstrom 12 die Synthesevorrichtung 13 durch den im unteren Bereich des Druckbehälters 14 angeordneten Auslass 16.

Bei der Ausführungsvariante der Synthesevorrichtung 13 gemäß Figur 1 sind somit die Strömungswege derart, dass das eintretende Eduktfluid zunächst in Querrichtung oder in radialer Richtung durch den Plattenwärmetauscher 7 strömt und dabei vorgewärmt wird, dann außen durch den Ringraum zwischen dem ersten Katalysatorbett 9 und dem Behältermantel strömt und von radial außen her in das erste Katalysatorbett 9 einströmt. Das Eduktfluid durchströmt dieses erste Katalysatorbett 9 von radial außen nach radial innen oder in Querrichtung von außen nach innen, strömt dann innenseitig an dem ersten Katalysatorbett 9 entlang axial wieder nach oben hin, strömt dann erneut durch den ersten Plattenwärmetauscher 7, kühlt sich dort ab, tritt danach in das zentrisch angeordnete Strömungsrohr 21 ein und strömt durch dieses axial wieder in Pfeilrichtung nach unten, dann unterhalb des ersten Katalysatorbetts, das heißt zwischen den beiden Katalysatorbetten 9, 9'wieder radial nach außen, um dann von radial außen her in das zweite Katalysatorbett 9' einzutreten und dieses von radial außen nach radial innen hin zu durchströmen und schließlich die Synthesevorrichtung 13 über den rohrförmigen Auslass 16 zu verlassen.

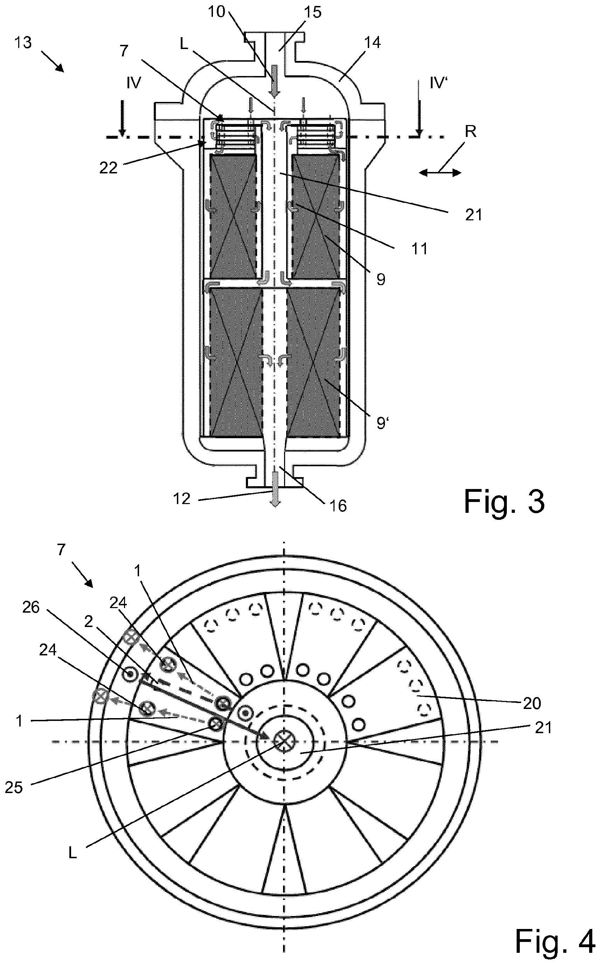

In Fig. 3 ist eine als Ammoniakkonverter ausgebildete Synthesevorrichtung 13 gemäß einem zweiten Ausführungsbeispiel dargestellt. Der Aufbau dieser Synthesevorrichtung 13 entspricht grundsätzlich der des ersten Ausführungsbeispiels, wobei jedoch ein abweichend ausgestalteter, erfindungsgemäßer Plattenwärmetauscher 7 vorgesehen ist. Der Plattenwärmetauscher 7 gemäß dem zweiten Ausführungsbeispiel ist dabei derart ausgestaltet, dass das Produktfluid 11 durch den Plattenwärmetauscher im Verhältnis zu dem Eduktfluid 10 in einer Gleichstromführung geleitet werden kann, wodurch die maximalen Temperaturen innerhalb des Plattenwärmetauschers reduziert werden. Hierdurch wird es möglich, den Plattenwärmetauscher 7 aus günstigeren und leichter verformbaren Werkstoffen zu fertigen als dies bei dem Plattenwärmetauscher gemäß dem ersten Ausführungsbeispiel der Fall ist.

Wie Fig. 4 zeigt, sind zwischen den Platten 20 in radialer Richtung R verlaufende erste Strömungskanäle 1 für das Eduktfluid 10 angeordnet. Das Eduktfluid 10 tritt in die ersten Strömungskanäle 1 über erste Einlässe 25 ein, welche kreisförmig ausgebildet sind. Die ersten Einlässe 25 sind nahe dem Strömungsrohr 21, also im Bereich nahe der Längsachse L, angeordnet. Ausgehend von den Einlässen 25 strömt das Eduktfluid 10 von innen nach außen radial durch die ersten Strömungskanäle 1. Über die ersten Strömungskanäle 1 gelangt das Eduktfluid 10 in Auslässe 24, über welche das nun vorgewärmte Eduktfluid 10 nach unten aus dem Plattenwärmetauscher 7 ausströmt. Es strömt über einen Spaltraum zwischen dem ersten Katalysatorbett 9 und der Innenwandung des Druckbehälters 14 bzw. einer zusätzlichen, konzentrisch zur Innenwand 14 des Druckbehälters angeordneten äußeren Begrenzungswand eines Konvertereinsatzes in das erste Katalysatorbett 9.

Der vorgewärmte Eduktstrom durchströmt das erste Katalysatorbett 9 radial von außen nach innen. Dabei findet bevorzugt eine exotherme Reaktion unter Bildung eines Produktstroms 11 statt. Bevorzugt verlässt der Produktstrom 11 das Katalysatorbett 9 mit einer Temperatur von höchstens 525°C. Der Produktstrom 11 wird über einen konzentrisch zu dem Strömungsrohr 21 angeordneten inneren Ringraum in zweite Strömungskanäle 2 des Plattenwärmetauschers 7 geleitet, welche in radialer Richtung R verlaufend angeordnet sind. Das Produktfluid 11 strömt durch die zweiten Strömungskanäle 2 von innen nach außen also im Gleichstrom mit dem Eduktfluid 10. Über einen den Plattenstapel 22 umgebenden äußeren Ringraum wird das nunmehr abgekühlte Produktfluid 11 an der Oberseite des Plattenwärmetauschers 7 entlang, radial von außen nach innen geführt und schließlich dem Strömungsrohr 21 zugeleitet. Über das Strömungsrohr 21 wird das abgekühlte Produktfluid 11 an dem ersten Katalysatorbett 9 vorbei zu dem zweiten Katalysatorbett 9' geführt.

Das zweite Katalysatorbett 9' wird bevorzugt radial von außen nach innen durchströmt, wobei ein weiterer Teil der im Produktstrom enthaltenden Edukte zu Produkt umgesetzt werden. Bevorzugt verlässt der so gebildete zweite Produktstrom 12 die Synthesevorrichtung 13 durch den im unteren Bereich des Druckbehälters 14 angeordneten Auslass 16.

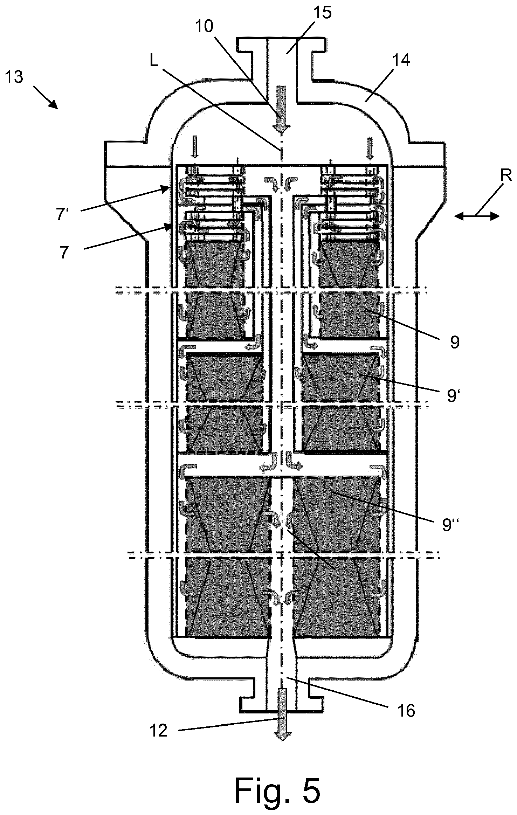

Die Fig. 5 zeigt eine als Ammoniakkonverter ausgebildete Synthesevorrichtung 13 mit einen Druckbehälter 14 gemäß einem dritten Ausführungsbeispiel der Erfindung. Innerhalb des Druckbehälters 14 sind ein erstes Katalysatorbett 9, ein zweites Katalysatorbett 9' und ein drittes Katalysatorbett 9" angeordnet. Die Katalysatorbetten 9, 9', 9" sind zylinderringförmig, d.h. hohlzylindrisch, ausgebildet. Das zweite Katalysatorbett 9' ist unterhalb des ersten Katalysatorbetts 9 angeordnet. Das dritte Katalysatorbett 9" ist unterhalb des zweiten Katalysatorbetts 9' angeordnet. Alle Katalysatorbetten 9, 9', 9" sind konzentrisch zu der Längssachse L des Druckbehälters 14 angeordnet. Über einen an der Oberseite des Druckbehälters 14 angeordneten Einlass 15 kann ein Eduktstrom 10, umfassend Reaktanden und ggf. inerte Komponenten, in den Druckbehälter 14 eingeleitet werden. An der Unterseite des Druckbehälters 14 ist ein Auslass 16 zum Abziehen eines Produktstroms 12 vorgesehen. Innerhalb des Druckbehälters 14 ist ein als Plattenwärmetauscher ausgebildeter erster Wärmetauscher 7 derart angeordnet, dass ein aus dem ersten Katalysatorbett 9 austretendes Produktfluid 11 dem ersten Wärmetauscher 7 zur Abgabe von Wärme zuleitbar ist, und nach der Abgabe der Wärme in dem Wärmetauscher 7 dem zweiten Katalysatorbett 9' zuleitbar ist. Der erste Plattenwärmetauscher 7 ist unmittelbar oberhalb des ersten Katalysatorbetts 9 angeordnet. Zudem ist in dem Druckbehälter 14 ein zweiter Plattenwärmetauscher 7' vorgesehen, welcher oberhalb des ersten Plattenwärmetauschers 7 angeordnet ist. Der zweite Plattenwärmetauscher 7' ist derart angeordnet, dass ein aus dem zweiten Katalysatorbett 9' austretendes Produktfluid dem zweiten Wärmetauscher 7' zur Abgabe von Wärme zuleitbar ist, und das Produktfluid nach der Abgabe der Wärme dem dritten Katalysatorbett 9" zuleitbar ist.

Bei der Ausführungsvariante der Synthesevorrichtung gemäß Figur 5 sind die Strömungsverhältnisse derart, dass das eintretende Eduktfluid 10 zunächst in dem ersten Plattenwärmetauscher 7 vorgewärmt wird, dann das erste obere Katalysatorbett 9 von radial außen nach radial innen hin oder in Querrichtung durchströmt und dann erneut durch den ersten Plattenwärmetauscher 7 strömt, um sich dort abzukühlen. Nach der Reaktion im ersten Katalysatorbett 9 strömt das Produktfluid achsparallel in Pfeilrichtung nach unten und dann radial nach außen, um danach von radial außen her in das zweite Katalysatorbett 9'einzutreten und dieses nach innen hin zu durchströmen. Danach strömt das Produktfluid durch einen konzentrisch weiter innen liegenden Kanal in Pfeilrichtung wieder achsparallel nach oben hin, um zur Abkühlung den zweiten oberen Plattenwärmetauscher 7' zu durchströmen und gelangt dann in das mittig axial im Reaktor angeordnete Strömungsrohr und strömt in diesem axial in Richtung der Pfeile wieder nach unten bis unterhalb des zweiten Katalysatorbetts 9', um dann in dem Zwischenraum zwischen diesem zweiten und dem dritten Katalysatorbett 9" radial nach außen zu strömen und dieses dritte Katalysatorbett 9" wiederum von radial außen nach radial innen oder in Querrichtung zu durchströmen und tritt dann schließlich durch den Auslass 16 in axialer Richtung aus der Synthesevorrichtung 13 aus.

### Bezugszeichenliste:

- 1: Strömungskanal
- 2: Strömungskanal
- 3: Strömungskanal
- 7, 7': Plattenwärmetauscher
- 9/9'/9": Katalysatorbett
- 10: Eduktstrom
- 11: Produktstrom
- 12: weiterer Produktstrom
- 13: Synthesevorrichtung
- 14: Druckbehälter
- 15: Einlass
- 16: Auslass
- 20: Platte
- 21: Strömungsrohr
- 22: Plattenstapel
- 23: Auströmöffnung
- 24: Auslass
- 25: Einlass
- 26: Einlass
- L: Längsachse
- R: radiale Richtung

## Patentansprüche

1. Ammoniaksynthesekonverter (13), welcher die folgenden Komponenten umfasst:
einen Druckbehälter (14),
ein erstes Katalysatorbett (9), welches innerhalb des Druckbehälters (14) angeordnet ist;
ein zweites Katalysatorbett (9'), welches innerhalb des Druckbehälters (14) unterhalb des ersten Katalysatorbetts (9) angeordnet ist;
einen ersten Wärmetauscher (7), welcher derart angeordnet ist, dass ein aus dem ersten Katalysatorbett (9) austretendes Produktfluid (11) dem ersten Wärmetauscher (7) zur Abgabe von Wärme zuleitbar ist, und nach der Abgabe der Wärme in dem ersten Wärmetauscher (7) dem zweiten Katalysatorbett (9') zuleitbar ist, wobei der erste Wärmetauscher (7) als Plattenwärmetauscher ausgebildet ist und der erste Wärmetauscher (7) oberhalb des ersten Katalysatorbetts (9) angeordnet ist, **dadurch gekennzeichnet, dass** der erste Wärmetauscher (7) einen Plattenstapel (22) aus Platten (20) umfasst, welche parallel zueinander angeordnet sind, wobei zwischen den Platten (20) in Querrichtung oder in radialer Richtung (R) verlaufende erste Strömungskanäle (1) für ein erstes Fluid angeordnet sind, und ein Strömungsrohr (21) für ein zweites Fluid, welches derart entlang der Längsachse (L) verlaufend angeordnet ist, dass die Platten (20) das Strömungsrohr (21) konzentrisch umgeben.

2. Ammoniaksynthesekonverter nach Anspruch 1, **dadurch gekennzeichnet, dass** ein Strömungsrohr (21) des Wärmetauschers (7) an einer Unterseite des Plattenstapels (22) aus dem Plattenstapel (22) hervorsteht, wobei das erste Katalysatorbett (9) ringförmig ausgebildet ist und das Strömungsrohr (21) konzentrisch umgibt.

3. Ammoniaksynthesekonverter nach einem der Ansprüche 1 oder 2, **gekennzeichnet durch** ein drittes Katalysatorbett (9") und einen zweiten Wärmetauscher (7'), welcher derart angeordnet ist, dass ein aus dem zweiten Katalysatorbett (9') austretendes Produktfluid dem zweiten Wärmetauscher (7') zur Abgabe von Wärme zuleitbar ist, und das Produktfluid nach der Abgabe der Wärme dem dritten Katalysatorbett (9") zuleitbar ist.

4. Ammoniaksynthesekonverter nach Anspruch 3, **dadurch gekennzeichnet, dass** der zweite Wärmetauscher (7') oberhalb des ersten Wärmetauschers (7) angeordnet ist.

5. Ammoniaksynthesekonverter nach einem der Ansprüche 3 oder 4, **dadurch gekennzeichnet, dass** der erste Wärmetauscher (7) und der zweite Wärmetauscher (7') derart angeordnet sind, dass ein in den Druckbehälter (14) eintretendes Eduktfluid (10) zunächst durch den zweiten Wärmetauscher (7'), dann durch den ersten Wärmetauscher (7) und dann in das erste Katalysatorbett (9) leitbar ist.

6. Ammoniaksynthesekonverter (13) nach einem der Ansprüche 1 bis 5, **dadurch gekennzeichnet, dass** der zweite Wärmetauscher (7') einen Plattenstapel (22) aus Platten (20) umfasst, welche parallel zueinander angeordnet sind, wobei zwischen den Platten (20) in Querrichtung oder in radialer Richtung (R) verlaufende erste Strömungskanäle (1) für ein erstes Fluid angeordnet sind, und ein Strömungsrohr (21) für ein zweites Fluid derart entlang der Längsachse (L) verlaufend angeordnet ist, dass die Platten (20) das Strömungsrohr (21) konzentrisch umgeben.

7. Ammoniaksynthesekonverter nach Anspruch 6, **dadurch gekennzeichnet, dass** der erste Wärmetauscher (7) und/oder der zweite Wärmetauscher (7') mehrere kreisringförmige oder kreisringsegmentförmige Platten (20) umfassen, welche um eine gemeinsame Längsachse (L) angeordnet sind.

8. Ammoniaksynthesekonverter nach einem der Ansprüche 6 oder 7, **dadurch gekennzeichnet, dass** der erste und/oder der zweite Wärmetauscher (7, 7') einen an der Oberseite des Plattenstapels (22) angeordneten ersten Einlass (25) für das erste Fluid aufweisen, welcher derart mit mehreren, zwischen verschiedenen Platten (20) angeordneten ersten Strömungskanälen (1) verbunden ist, dass diese Strömungskanäle (1) parallel von dem ersten Fluid durchströmbar sind.

9. Ammoniaksynthesekonverter nach Anspruch 8, **dadurch gekennzeichnet, dass** der erste Einlass (25) des Wärmetauschers (7, 7') derart angeordnet ist, dass die ersten Strömungskanäle (1) von dem ersten Fluid radial von innen nach außen durchströmbar sind.

10. Ammoniaksynthesekonverter nach einem der Ansprüche 6 bis 9, **dadurch gekennzeichnet, dass** die ersten Strömungskanäle (1) jeweils eine Ausströmöffnung (23) aufweisen, durch welche das erste Fluid in einer Richtung (R) parallel zu den Platten (20) ausströmen kann.

11. Ammoniaksynthesekonverter nach einem der Ansprüche 6 bis 10, **gekennzeichnet durch** mindestens einen an der Unterseite des Plattenstapels (22) angeordneten ersten Auslass für das erste Fluid, welcher derart mit mehreren, zwischen verschiedenen Platten (20) angeordneten ersten Strömungskanälen (1) verbunden ist, dass diese Strömungskanäle (1) parallel von dem ersten Fluid durchströmbar sind.

12. Ammoniaksynthesekonverter nach einem der Ansprüche 6 bis 11, **dadurch gekennzeichnet, dass** zwischen den Platten (20) in radialer Richtung (R) verlaufende zweite Strömungskanäle (2) für das zweite Fluid angeordnet sind.

13. Ammoniaksynthesekonverter nach einem der Ansprüche 6 bis 12, **dadurch gekennzeichnet, dass** zwischen den kreisringförmigen oder kreisringsegmentförmigen Platten (20) in einer Umfangsrichtung der Platten (20) verlaufende dritte Strömungskanäle (3) angeordnet sind.

14. Verfahren zur Herstellung von Ammoniak aus den Edukten Wasserstoff und Stickstoff , wobei das Verfahren die folgenden Schritte umfasst:
a) Bereitstellen eines Eduktstroms (10) umfassend Reaktanden und ggf. inerte Komponenten;
b) Einleiten des Eduktstroms (10) in einen Druckbehälter (14);
c) Weiterleiten des Eduktstroms (10) auf ein erstes Katalysatorbett (9);
d) Umsetzen zumindest eines Teils der Reaktanden des Eduktstroms (10) auf dem ersten Katalysatorbett (9) unter Bildung eines ersten Produktstroms (11), umfassend Reaktanden, Produkt und ggf. Inerte; und
e) Einleiten des ersten Produktstroms (11) in einen ersten Wärmetauscher (7), wobei der erste Produktstrom (11) abgekühlt wird;
f) Weiterleiten des abgekühlten, ersten Produktstroms auf ein zweites Katalysatorbett (9);
g) Umsetzen zumindest eines Teils der Reaktanden des abgekühlten, ersten Produktstroms auf dem zweiten Katalysatorbett (9") unter Bildung eines zweiten Produktstroms (12), umfassend Reaktanden, Produkt und ggf. Inerte;
**dadurch gekennzeichnet, dass** das Verfahren in einer Ammoniaksynthesekonverter mit mindestens einem Plattenwärmetauscher (7, 7') nach einem der Ansprüche 1 bis 13 durchgeführt wird.

15. Verfahren nach Anspruch 14, **dadurch gekennzeichnet, dass** es sich um eine exotherme Synthese mit heterogener Katalyse handelt.

## Claims

1. Ammonia synthesis converter (13) which comprises the following components:
a pressure vessel (14),
a first catalyst bed (9) which is arranged within the pressure vessel (14);
a second catalyst bed (9') which is arranged within the pressure vessel (14) beneath the first catalyst bed (9);
a first heat exchanger (7), which is arranged in such a way that a product fluid (11) exiting from the first catalyst bed (9) can be introduced into the first heat exchanger (7) for outward transfer of heat and after the outward transfer of heat in the first heat exchanger (7) can be introduced into the second catalyst bed (9'), where the first heat exchanger (7) is configured as plate heat exchanger and the first heat exchanger (7) is arranged above the first catalyst bed (9), **characterized in that** the first heat exchanger (7) comprises a plate stack (22) of plates (20) which are arranged parallel to one another, where first flow channels (1) for a first fluid which run in the transverse direction or in the radial direction (R) are arranged between the plates (20), and a flow tube (21) for a second fluid which is arranged running along the longitudinal axis (L) in such a way that the plates (20) concentrically surround the flow tube (21).

2. Ammonia synthesis converter according to Claim 1, **characterized in that** a flow tube (21) of the heat exchanger (7) projects from the plate stack (22) at an underside of the plate stack (22), where the first catalyst bed (9) is configured in the form of a ring and concentrically surrounds the flow tube (21) .

3. Ammonia synthesis converter according to either Claim 1 or 2, **characterized by** a third catalyst bed (9") and second heat exchanger (7') which is arranged in such a way that a product fluid exiting from the second catalyst bed (9') can be introduced into the second heat exchanger (7') for the outward transfer of heat and the product fluid can, after the outward transfer of heat, be introduced into the third catalyst bed (9").

4. Ammonia synthesis converter according to Claim 3, **characterized in that** the second heat exchanger (7') is arranged above the first heat exchanger (7).

5. Ammonia synthesis converter according to either Claim 3 or 4, **characterized in that** the first heat exchanger (7) and the second heat exchanger (7') are arranged in such a way that a feed fluid (10) entering the pressure vessel (14) can be firstly conveyed through the second heat exchanger (7'), then through the first heat exchanger (7) and then into the first catalyst bed (9).

6. Ammonia synthesis converter (13) according to any of Claims 1 to 5, **characterized in that** the second heat exchanger (7') comprises a plate stack (22) of plates (20) which are arranged parallel to one another, where first flow channels (1) for a first fluid are arranged in the transverse direction or in the radial direction (R) between the plates (20), and a flow tube (21) for a second fluid which is arranged running along the longitudinal axis (L) in such a way that the plates (20) concentrically surround the flow tube (21).

7. Ammonia synthesis converter according to Claim 6, **characterized in that** the first heat exchanger (7) and/or the second heat exchanger (7') comprise a plurality of plates (20) which have the shape of a circle or a segment of a circle and are arranged around a common longitudinal axis (L).

8. Ammonia synthesis converter according to either Claim 6 or 7, **characterized in that** the first and/or the second heat exchanger (7, 7') have a first inlet (25) for the first fluid which is arranged on the upper side of the plate stack (22) and is connected with a plurality of first flow channels (1) arranged between various plates (20) in such a way that the first fluid can flow in parallel through these flow channels (1).

9. Ammonia synthesis converter according to Claim 8, **characterized in that** the first inlet (25) of the heat exchanger (7, 7') is arranged in such a way that the first fluid can flow radially from the inside outwards through the first flow channels (1).

10. Ammonia synthesis converter according to any of Claims 6 to 9, **characterized in that** the first flow channels (1) each have an outflow opening (23) through which the first fluid can flow out in a direction (R) parallel to the plates (20).

11. Ammonia synthesis converter according to any of Claims 6 to 10, **characterized by** at least one first outlet for the first fluid which is arranged on the underside of the plate stack (22) and is connected to a plurality of first flow channels (1) arranged between various plates (20) in such a way that the first fluid can flow in parallel through these flow channels (1).

12. Ammonia synthesis converter according to any of Claims 6 to 11, **characterized in that** second flow channels (2) for the second fluid running in the radial direction are arranged (R) between the plates (20) .

13. Ammonia synthesis converter according to any of Claims 6 to 12, **characterized in that** third flow channels (3) running in a circumferential direction of the plates (20) are arranged between the plates (20) having the shape of a circle or a segment of a circle.

14. Process for preparing ammonia from the starting materials hydrogen and nitrogen, where the process comprises the following steps:
a) providing a feed stream (10)comprising reactants and optionally inert components;
b) introducing the feed stream (10) into a pressure vessel (14);
c) conveying the feed stream (10) further to a first catalyst bed (9);
d) reacting at least part of the reactants of the feed stream (10) over the first catalyst bed (9) to form a first product stream (11) comprising reactants, product and optionally inerts; and
e) introducing the first product stream (11) into a first heat exchanger (7) in which the first product stream (11) is cooled;
f) conveying the cooled, first product stream further to a second catalyst bed (9);
g) reacting at least part of the reactants of the cooled, first product stream over the second catalyst bed (9") to form a second product stream (12) comprising reactants, product and optionally inerts;
**characterized in that** the process is carried out in an ammonia synthesis converter having at least one plate heat exchanger (7, 7') according to any of Claims 1 to 13.

15. Process according to Claim 14, **characterized in that** the synthesis concerned is an exothermic, heterogeneously catalyzed synthesis.

## Revendications

1. Convertisseur de synthèse d'ammoniac (13) qui comprend les composants suivants :
un récipient sous pression (14),
un premier lit de catalyseur (9) qui est disposé à l'intérieur du récipient sous pression (14) ;
un deuxième lit de catalyseur (9') qui est disposé à l'intérieur du récipient sous pression (14) en dessous du premier lit de catalyseur (9) ;
un premier échangeur de chaleur (7) qui est disposé de telle sorte qu'un fluide de produit (11) sortant du premier lit de catalyseur (9) puisse être acheminé au premier échangeur de chaleur (7) pour délivrer de la chaleur, et, après le dégagement de chaleur dans le premier échangeur de chaleur (7), puisse être acheminé au deuxième lit de catalyseur (9'), le premier échangeur de chaleur (7) étant réalisé sous forme d'échangeur de chaleur à plaques et le premier échangeur de chaleur (7) étant disposé au-dessus du premier lit de catalyseur (9), **caractérisé en ce que** le premier échangeur de chaleur (7) comprend un empilement de plaques (22) constitué de plaques (20) qui sont disposées parallèlement les unes aux autres, des premiers canaux d'écoulement (1) pour un premier fluide, s'étendant dans la direction transversale ou dans la direction radiale (R), étant disposés entre les plaques (20), et un tuyau d'écoulement (21) pour un deuxième fluide, qui est disposé de manière à s'étendre le long de l'axe longitudinal (L) de telle sorte que les plaques (20) entourent concentriquement le tuyau d'écoulement (21).

2. Convertisseur de synthèse d'ammoniac selon la revendication 1, **caractérisé en ce qu'**un tuyau d'écoulement (21) de l'échangeur de chaleur (7) dépasse de l'empilement de plaques (22) au niveau d'un côté inférieur de l'empilement de plaques (22), le premier lit de catalyseur (9) étant réalisé sous forme annulaire et entourant concentriquement le tuyau d'écoulement (21).

3. Convertisseur de synthèse d'ammoniac selon l'une quelconque des revendications 1 et 2, **caractérisé par** un troisième lit de catalyseur (9") et un deuxième échangeur de chaleur (7'), qui est disposé de telle sorte qu'un fluide de produit sortant du deuxième lit de catalyseur (9') puisse être acheminé au deuxième échangeur de chaleur (7') en vue de délivrer de la chaleur et que le fluide de produit puisse être acheminé après le dégagement de chaleur au troisième lit de catalyseur (9").

4. Convertisseur de synthèse d'ammoniac selon la revendication 3, **caractérisé en ce que** le deuxième échangeur de chaleur (7') est disposé au-dessus du premier échangeur de chaleur (7).

5. Convertisseur de synthèse d'ammoniac selon l'une quelconque des revendications 3 et 4, **caractérisé en ce que** le premier échangeur de chaleur (7) et le deuxième échangeur de chaleur (7') sont disposés de telle sorte qu'un fluide éduit (10) entrant dans le récipient sous pression (14) puisse d'abord être conduit à travers le deuxième échangeur de chaleur (7'), puis à travers le premier échangeur de chaleur (7) et ensuite dans le premier lit de catalyseur (9).

6. Convertisseur de synthèse d'ammoniac (13) selon l'une quelconque des revendications 1 à 5, **caractérisé en ce que** le deuxième échangeur de chaleur (7') comprend un empilement de plaques (22) constitué de plaques (20) qui sont disposées parallèlement les unes aux autres, des premiers canaux d'écoulement (1) pour un premier fluide, s'étendant dans la direction transversale ou dans la direction radiale (R), étant disposés entre les plaques (20), et un tuyau d'écoulement (21) pour un deuxième fluide étant disposé de manière à s'étendre le long de l'axe longitudinal (L) de telle sorte que les plaques (20) entourent concentriquement le tuyau d'écoulement (21).

7. Convertisseur de synthèse d'ammoniac selon la revendication 6, **caractérisé en ce que** le premier échangeur de chaleur (7) et/ou le deuxième échangeur de chaleur (7') comprennent plusieurs plaques de forme annulaire circulaire ou en forme de segments annulaires circulaires (20) qui sont disposées autour d'un axe longitudinal commun (L).

8. Convertisseur de synthèse d'ammoniac selon l'une quelconque des revendications 6 et 7, **caractérisé en ce que** le premier et/ou le deuxième échangeur de chaleur (7, 7') présentent une première entrée (25) pour le premier fluide disposée au niveau du côté supérieur de l'empilement de plaques (22), laquelle est connectée à plusieurs premiers canaux d'écoulement (1) disposés entre différentes plaques (20) de telle sorte que ces canaux d'écoulement (1) puissent être parcourus parallèlement par le premier fluide.

9. Convertisseur de synthèse d'ammoniac selon la revendication 8, **caractérisé en ce que** la première entrée (25) de l'échangeur de chaleur (7, 7') est disposée de telle sorte que les premiers canaux d'écoulement (1) puissent être parcourus radialement de l'intérieur vers l'extérieur par le premier fluide.

10. Convertisseur de synthèse d'ammoniac selon l'une quelconque des revendications 6 à 9, **caractérisé en ce que** les premiers canaux d'écoulement (1) présentent à chaque fois une ouverture de sortie (23) à travers laquelle le premier fluide peut sortir dans une direction (R) parallèlement aux plaques (20).

11. Convertisseur de synthèse d'ammoniac selon l'une quelconque des revendications 6 à 10, **caractérisé par** au moins une première sortie pour le premier fluide disposée au niveau du côté inférieur de l'empilement de plaques (22), laquelle est connectée à plusieurs premiers canaux d'écoulement (1) disposés entre différentes plaques (20) de telle sorte que ces canaux d'écoulement (1) puissent être parcourus parallèlement par le premier fluide.

12. Convertisseur de synthèse d'ammoniac selon l'une quelconque des revendications 6 à 11, **caractérisé en ce qu'**entre les plaques (20) sont disposés des deuxièmes canaux d'écoulement (2) pour le deuxième fluide s'étendant dans la direction radiale (R).

13. Convertisseur de synthèse d'ammoniac selon l'une quelconque des revendications 6 à 12, **caractérisé en ce qu'**entre les plaques de forme annulaire circulaire ou en forme de segments annulaires circulaires (20) sont disposés des troisièmes canaux d'écoulement (3) s'étendant dans une direction périphérique des plaques (20).

14. Procédé de fabrication d'ammoniac à partir des éduits hydrogène et azote, le procédé comprenant les étapes suivantes :
a) fourniture d'un courant d'éduit (10) comprenant des réactifs et éventuellement des composants inertes ;
b) introduction du courant d'éduit (10) dans un récipient sous pression (14) ;
c) transfert du courant d'éduit (10) à un premier lit de catalyseur (9) ;
d) réaction d'au moins une partie des réactifs du courant d'éduit (10) sur le premier lit de catalyseur (9) en formant un premier flux de produit (11) comprenant des réactifs, le produit et éventuellement des matières inertes ; et
e) introduction du premier flux de produit (11) dans un premier échangeur de chaleur (7), le premier flux de produit (11) étant refroidi ;
f) transfert du premier flux de produit refroidi à un deuxième lit de catalyseur (9) ;
g) réaction d'au moins une partie des réactifs du premier flux de produit refroidi sur le deuxième lit de catalyseur (9") en formant un deuxième flux de produit (12) comprenant des réactifs, le produit et éventuellement des matières inertes ;
**caractérisé en ce que**
le procédé est mis en œuvre dans un convertisseur de synthèse d'ammoniac avec au moins un échangeur de chaleur à plaques (7, 7') selon l'une quelconque des revendications 1 à 13.

15. Procédé selon la revendication 14, **caractérisé en ce qu'**il s'agit d'une synthèse exothermique avec une catalyse hétérogène.
